## Europäisches Patentamt
## European Patent Office
## Office européen des brevets

(19)

(11) Veröffentlichungsnummer: **0 130 629**
**B1**

(12) **EUROPÄISCHE PATENTSCHRIFT**

(45) Veröffentlichungstag der Patentschrift:
02.09.87

(21) Anmeldenummer: 84107916.3

(22) Anmeldetag: 10.12.82

(51) Int. Cl.⁴: **C 04 B 41/61,** C 04 B 30/00,
B 32 B 18/00, B 32 B 19/06,
C 04 B 28/24

(54) Durch Pressen verdichteter Wärmedämmkörper aus einem hochdispersen Dämmaterial, sowie Verfahren zu seiner Herstellung.

(30) Priorität: 10.12.81 DE 3149004
05.08.82 DE 3229318

(43) Veröffentlichungstag der Anmeldung:
09.01.85 Patentblatt 85/2

(45) Bekanntmachung des Hinweises auf die Patenterteilung:
02.09.87 Patentblatt 87/36

(84) Benannte Vertragsstaaten:
AT BE CH DE FR GB IT LI LU NL SE

(56) Entgegenhaltungen:
DE-A-2 747 663
DE-A-2 849 246
DE-B-1 029 725
DE-B-1 240 457
DE-B-2 049 064

(73) Patentinhaber: Grünzweig + Hartmann und
Glasfaser AG, Bürgermeister- Grünzweig- Strasse
1-47, D-6700 Ludwigshafen am Rhein (DE)

(72) Erfinder: Kummermehr, Hans,
Prinzregentenstrasse 25a, D-6700 Ludwigshafen
(DE)

(74) Vertreter: Kuhnen, Wacker & Partner,
Schneggstrasse 3-5 Postfach 1729, D-8050 Freising
(DE)

EP 0 130 629 B1

LIBER, STOCKHOLM 1987

## Beschreibung

Die Erfindung betrifft einen durch Pressen verdichteten Wärmedämmkörper aus einem hochdispersem Dämmaterial, nach dem Oberbegriff des Anspruchs 1, sowie ein zu seiner Herstellung besonders geeignetes Verfahren.

Derartige hochdisperse Dämmaterialien werden durch die Anmelderin unter der Bezeichnung MINILEIT (eingetr. Warenzeichen) hergestellt und vertrieben und bestehen aus einem aus der Flammenhydrolyse gewonnenen mikroporösen Oxidaerogel, insbesondere Kieselsäureaerogel und/oder Aluminiumoxidaerogel, ggf. mit geeigneten Zuschlagstoffen wie verstärkenden Mineralfasern und/oder Trübungsmittel.

Wie in diesem Zusammenhang etwa in der DE-C-1 954 992 ausführlich erläutert ist, besteht das wesentliche Problem, daß aus solchen feindispersen Stoffen hergestellte Presskörper zwar ausgezeichnete Wärmedämmeigenschaften besitzen, mechanisch aber kaum belastbar sind. Bei der Handhabung und dem Einsatz solcher durch Pressen verdichteter Wärmedämmkörper bröselt bereits bei geringen mechanischen Beaufschlagungen das mikroporöse Material an der Oberfläche ab. Die mechanischen Eigenschaften derartiger Formkörper ähneln denjenigen von beispielsweise gebundenem feinem Sand oder dergleichen.

Nach der Lehre der gannten DE-C-1 954 992 soll ein solcher Wärmedämmkörper dadurch eine bessere mechanische Belastbarkeit erhalten, daß er von einer flexiblen Umhüllung umgeben ist, die mit Druck am Preßstoff anliegt. Gemäß der weiteren Lehre etwa der DE-C-2 036 124 soll das Pressen des mikroporösen Stoffes in der Umhüllung so geführt werden, daß eine möglichst innige Verzahnung der feindispersen Stoffe untereinander und mit der Oberfläche bzw. den Poren der relativ rauhen Umhüllung beispielsweise aus Glasgewebe erfolgt. Hierdurch soll eine Verwendung von beispielsweise harzartigen Bindemitteln, welche die Wärmedämmfähigkeit beeinträchtigen, vermieden werden.

Mit derartigen Umhüllungen lassen sich zwar die mechanischen Eigenschaften von Wärmedämmkörpern auf der Basis solcher mikroporöser Preßstoffe in gewissem Umfange verbessern, jedoch reicht diese Verbesserung nur für eine relativ geringe Anzahl von Anwendungsfällen aus und scheiden durch die notwendige Umhüllung aus Glasgewebe oder dergleichen, ganz abgesehen von dem erforderlichen Aufwand hierfür, sehr viele weitere Anwendungsfälle aus, bei denen eine solche Umhüllung stört oder überhaupt nicht verwendbar ist.

Beispielsweise aus der DE-A-2 942 087 ist auch bekannt, derartiges hochdisperses Dämmaterial mittels eines Bindemittels zu "härten". Danach liegt das Bindemittel, welches in einem Vorgemisch gleichförmig mit einem Dispergiermittel verteilt ist, feindispers vor, so daß die Aerogel- und Trübungsmittelteilchen an ihren Kanten und Ecken im Verbund homogen kreuzvernetzt werden. Hierdurch entsteht ein Wärmedämmkörper höherer Biegefestigkeit, die sich durch die mittels des Bindemittels miteinander verbackenen Aerogel- und Trübungsmittelteilchen ergibt, welche einen festen, starren Verbund bilden.

Mittels eines solchen Härtungseffektes wird keine Verminderung der Sprödigkeit, sondern nur eine Erhöhung der Festigkeit bis zum Eintritt des Sprödbruches erreicht, und nach wie vor führen relativ geringe mechanische Beaufschlagungen zu einem Abbröseln des mikroporösen Materials von der Oberfläche des Wärmedämmkörpers.

Überdies ergeben sich bei einem Zusatz von in der Wärme aushärtendem Bindemittel lokal unterschiedliche, vom jeweiligen Raumgewicht und der jeweiligen lokalen Zusammensetzung abhängige Schrumpfungen und sonstige Formänderungen des Wärmedämmkörpers. Dadurch liegt der Wärmedämmkörper bei der Entnahme aus dem Haftungsofen mit unregelmäßiger Oberfläche vor, die nicht plan ist.

Gemäß dem Oberbegriff des Anspruchs 1 ist es aus der DE-A-2 747 663 bereits bekannt, einen durch Pressen verdichteten Formkörper aus dem hier in Rede stehenden hochdispersen Dämmaterial mit einer Beschichtung auf der Basis eines anorganischen Bindemittels zu versehen, die durch einen Spritz- und/oder Tauchvorgang aufgebracht ist. Bei dem anorganischen Bindemittel handelt es sich dabei um Wasserglas, insbesondere Kaliwasserglas, wobei in die Mischung ein bestimmter Gehalt an mineralischen Fasern eingearbeitet werden kann. Die in einer Aufschlämmung aufgebrachte Beschichtung wird sodann bei 100°C bis 150°C getrocknet und bildet dann einen Schutz der empfindlichen Oberfläche des Wärmedämmkörpers und verbessert deren Abriebfestigkeit.

Es hat sich gezeigt, daß eine solche Beschichtung auf der Basis von Wasserglas bei hohen Temperaturen in einem solchen Umfange Schrumpfungen ausgesetzt ist, der bei großflächigen Beschichtungen trotz des gemäß der DE-A-2 747 663 vorgesehenen Gehalts von 2 bis 10 Gew.-% Mineralwolle zu Beschädigungen führen kann. Bei Anwendung in Berührung mit unter Spannung stehenden Teilen treten darüber hinaus Kriechströme durch den Wasserglaszusatz auf. Insbesondere bei Anwendung unter relativ starken mechanischen Belastungen bei hohen Temperaturen besteht die Gefahr einer nicht ausreichenden Standfestigkeit der Beschichtung.

Demgegenüber liegt der Erfindung die Aufgabe zugrunde, einen Wäremdämmkörper der gattungsgemäßen Art, der ohne Umhüllung aus Glasgewebe oder dergleichen gepreßt ist, jedoch eine Beschichtung auf der Basis eines anorganischen Bindemittels aufweist, derart zu schaffen, daß die Beschädigungsgefahr insbesondere im Hochtemperatureinsatz deutlich vermindert ist.

Diese Aufgabe wird durch die kennzeichnenden Merkmale des Anspruchs 1 gelöst.

Dadurch, daß für die Deckschicht ein keramisierendes Bindemittellauf der Basis von Kieselsol verwendet wird, das bei Temperaturen zwischen etwa 500° C und 1000° C durch keramische Bindung verfestigt oder erhärtet, ergibt sich beim Hochtemperatureinsatz eines solchen Wärmedämmkörpers eine sehr harte, mechanisch beanspruchbare und insbesondere abriebs- und erosionsfeste Oberfläche, die auch hohe Spannungswechsel beim Abkühlen und Erhitzen aushält. Die in der Deckschicht enthaltenen Mineralfasern dienen einerseits als Dispergierungsmittel für das Kieselsol, um mit diesem eine geschlossene Oberfläche zu bilden, und andererseits im Sinne einer zusätzlichen mechanischen Verbesserung der Festigkeit des Wärmedämmkörpers und seiner Deckschicht, insbesondere bei Verwendung entsprechender Faserlängen.

Ein Teil der Mineralfasern kann durch billigere körnige Füllstoffe ersetzt werden, jedoch liegen die Mineralfasern in dem Füllstoffgemisch mit einem Anteil von wenigstens einem Drittel vor. Um die gewünschte Dispergierung des Kieselsol zu gewährleisten und dessen geschlossene Filmbildung sicherzustellen, ist es erforderlich, daß das Verhältnis des Trockengewichtsanteils des Kieselsol zu den mineralischen Füllstoffen bei höchstens 1 : 1 liegt, wobei also die mineralischen Füllstoffe zumindestens einem Drittel durch Mineralfasern gebildet sind. Andererseits ist es zur Erzielung der gewünschten Abriebfestigkeit und Durchkeramisierung wiederum erforderlich, daß das Verhältnis zwischen Kieselsol und mineralischen Füllstoffen mindestens 1 : 9 besteht, also auf neun Teile mineralische Füllstoffe wenigstens ein Teil Kieselsol kommt.

Die Deckschicht wird in einer solchen Dicke aufgebracht, die jedenfalls Unebenheiten der Oberfläche des Wärmedämmkörpers ausgleicht. Bei Bedarf kann eine Egalisierung der Oberfläche der noch zumindest plastischen Deckschicht durch Rakeln oder dergleichen erfolgen, um eine glatte Oberfläche zu erzielen.

Erfindungsgemäße Wärmedämmkörper eignen sich insbesondere als Wärmedämmplatten für Hochtemperatureinsatz, wie sie beispielsweise in Elektro-Wärmespeichergeräten zur Wärmedämmung der Speicherkerne eingesetzt sind, wobei eine Belastung mit Temperaturen bis etwa 750° C erfolgt. In diesen Geräten sind zum Teil luftführende Kanäle zwischen Speicherkern und Dämmplatte angeordnet. Insbesondere durch Spannungswechsel infolge häufiger Temperaturänderung wird die Oberfläche der Dämmplatte zusätzlich mechanisch belastet, wobei durch die auftretenden Strömungen Materialerosionen aus der Oberfläche des Wärmedämmkörpers befürchtet werden müssen. Derartige extreme Belastungsfälle treten natürlich auch anderweitig auf, so etwa bei einer Auskleidung von Triebwerksgehäusen, Abgaskanälen oder dergleichen.

Es kann zweckmäßig sein, wenn die Deckschicht zusätzlich ein organisches Bindemittel als Zuschlagstoff enthält. Dieses ergibt bei der Produktion eine Grundfestigkeit und Haftwirkung, bevor eine Keramisierung aufgetreten ist. Bei Erwärmung etwa im Betrieb über 200° C bis 300° C verbrennt das organische Bindemittel und wird dann auch nicht mehr benötigt.

Wenn im Zuge der Erwärmung des Wärmedämmkörpers zwischen der Verflüchtigung des organischen Bindemittels etwa bei 200° C bis 300° C und dem Einsetzen einer keramischen Bindung im Bereich zwischen 500° C und 1000° C eine "Bindungslücke" auftritt, oder überhaupt kein organisches Bindemittel verwendet wird, so kann die Bindungslücke durch ein zusätzliches, erst bei höheren Temperaturen verflüchtigendes Bindemittel etwa auf der Basis von Wasserglas geschlossen werden. Auf diese Weise kann im Zuge der Erwärmung bei Bedarf durch entsprechende Zuschlagstoffe eine lückenlose Stabilisierung der Oberfläche des Wärmedämmkörpers derart erzielt werden, daß beim Einsetzen der keramischen Bindung eine unbeschädigte Oberfläche vorliegt, die dann durch die keramische Bindung bleibend verfestigt wird. Neben einem Bindemittel auf der Basis von Wasserglas eignet sich hierzu eine Vielzahl von Gläsern oder glasbildenden Stoffen, beispielsweise auch Aluminiumsilikat.

Bei Bedarf kann eine zusätzliche Abdeckung der Abdeckschicht durch eine geeignete Kaschierungsbahn erfolgen, die durch die Haftwirkung der Beschichtung auf der Basis von Kieselsol sowie ggf. die Haftwirkung entsprechender Zuschlagstoffe beispielsweise in Form eines organischen Klebers gehalten werden kann. Durch die Verwendung einer Metallfolie wie einer Aluminiumfolie oder Edelstahlfolie als Kaschierungsbahn läßt sich eine dampfdiffusionsdichte Abdeckung des Wärmedämmkörpers erzielen. Dies ermöglicht einen Einsatz eines solchen, mit einer Deckschicht versehenen und zusätzlich kaschierten Materials auch dort, wo eine Dampfsperre erforderlich ist. Insbesondere im Falle einer hochtemperaturfesten Metallfolie wie einer Edelstahlfolie eignet sich ein solcher Wärmedämmkörper darüber hinaus auch für den gewünschten Hochtemperatureinsatz, und ist durch die Folie zusätzlich gegen Erosion und sonstige mechanische Belastungen insbesondere durch vorbeiströmende Gase geschützt.

Es kann jedoch auch eine Kaschierungsbahn aus einem sich Wärmeeinwirkung sich verflüchtigenden Werkstoff wie Papier gewählt werden, welche lediglich die Handhabbarkeit im Zuge der Produktion zusätzlich verbessern soll, und anschließend beim ersten Einsatz wegbrennt. Hierfür kann eine Kaschierungsbahn aus einem billigen, einfachen Material verwendet werden.

Weiterhin kann eine Kaschierung mittels eines Gewebes oder Geleges aus beispielsweise Glasfasern erfolgen. Schließlich kann die Deckschicht Verstärkungsfäden aufweisen, die insbesondere in die Schicht eingebettet sein können und so die Zugfestigkeit der Deckschicht verbessern.

Sofern keine größeren Oberflächenunebenheiten der Oberfläche des Wärmedämmkörpers, etwa infolge von dessen Härtung, vorliegen, reicht es in aller Regel aus, wenn die Deckschicht einen Überzug mit einer Schichtdicke von zwischen etwa 0,05 und 0,5 mm, vorzugsweise zwischen 0,2 und 0,3 mm bildet. Da die keramisierte Deckschicht hart und mechanisch widerstandsfähig ist, wirkt sie auch in einer solch geringen Schichtdicke ausreichend gegen etwa die Erosionswirkung von Abgasen oder dergleichen.

Für eine bahnförmige kontinuierliche oder quasi-kontinuierliche Fertigung des Wärmedämmkörpers in einer Fertigungsstraße kann die Aufbringung der Deckschicht in der Weise erfolgen, daß das Material der Deckschicht mittels Sprühens, Auftrags oder dergleichen in einer Aufschlämmung mit einem Wassergehalt von zwischen etwa 20 und 50 Gew.-%, vorzugsweise unter 40 Gew.-%, der Aufschlämmung auf die Preßstoffbahn aufgebracht und getrocknet wird. Die Trocknung erfolgt zweckmäßig bei erhöhter Temperatur zwischen 100° C und etwa 150° C, wobei aber natürlich auch eine Lufttrocknung in Frage kommt. Durch den relativ geringen Wassergehalt soll sichergestellt werden, daß nicht zuviel Feuchtigkeit aus der Aufschlämmung in das hygroskopische Wärmedämmaterial eindringt. Bei entsprechender Einstellung der Viskosität und des Wassergehaltes der Beschichtungsmasse kann jedoch ein geringfügiges Eindringen des Kieselsol und ggf. eines zugesetzten anorganischen Klebers in die Oberfläche des Wärmedämmkörpers erfolgen, um dort eine Klebewirkung entsprechend der parallelen EP-B-81 825 zu ergeben.

Weitere Einzelheiten, Merkmale und Vorteile der Erfindung ergeben sich aus der nachfolgenden Beschreibung von Ausführungsbeispielen anhand der Zeichnung.

Es zeigt

Fig. 1 einen Ausbruch aus einem erfindungsgemäßen Wärmedämmkörper in perspektivischer Ansicht,

Fig. 2 die Einzelheit aus Kreis A gemäß Fig. 1 in stark vergrößerter Darstellung gemäß einer ersten Ausführungsform der Erfindung und

Fig. 3 die Einzelheit aus Kreis A gemäß Fig. 1 in stark vergrößerter Darstellung gemäß einer zweiten Ausführungsform der Erfindung.

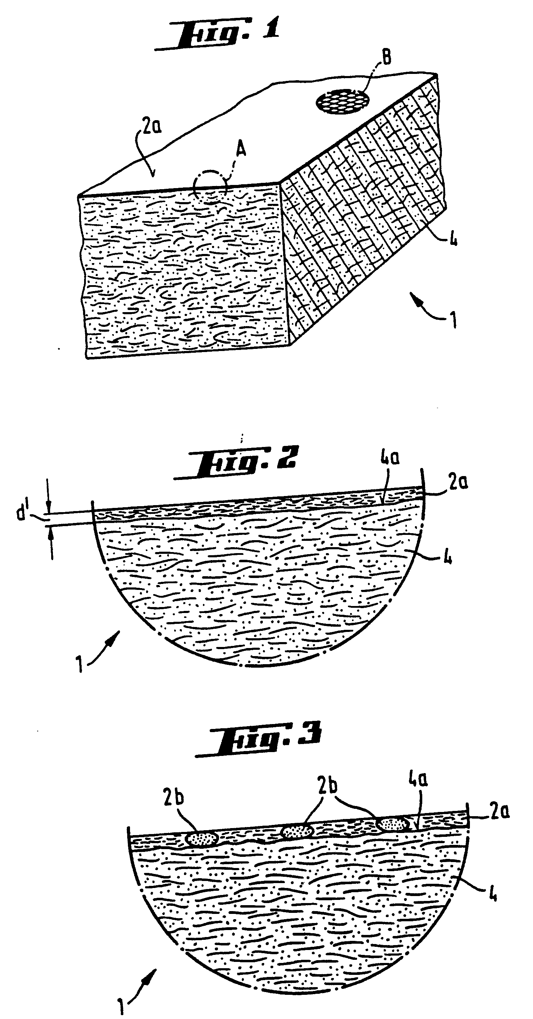

In Fig. 1 ist mit 1 ein Wärmedämmkörper bezeichnet, der mit einer Deckschicht 2a an einer seiner Oberflächen 4a versehen ist. Das Wärmedämmaterial des Wärmedämmkörpers 1 ist mit 4 bezeichnet und besteht aus einem aus der Flammenhydrolyse gewonnenen mikroporösen Oxidaerogel wie Kieselsäureaerogal oder Aluminiumoxidaerogel oder ein Gemisch hiervon, mit geeigneten Zuschlagstoffen wie verstärkenden Mineralfasern und in der Regel Trübungsmittel. Die Oberfläche 4a des Wärmedämmaterials 4 ist mit einer Deckschicht 2a versehen, die ein keramisches bzw. bei Temperaturen zwischen 500° C und 1000° C keramisierendes Bindemittel auf der Basis von Kieselsol aufweist, wie dies grundsätzlich etwa aus der DE-A-1 669 267 als Beschichtungsmaterial für Metallgießformen oder Bodenplatten hierfür sowie Pfannen, Fördergefäße oder Öfen in der Gießereitechnik bekannt ist, also solche Bauteile, deren Oberflächen mit der Schmelze in Berührung kommen oder aus anderen Gründen einer starken Hitzebelastung unterliegen. Das Kieselsol als keramisches Bindemittel wird zusammen mit anorganischen Fasern wie Aluminiumsilikatfasern oder Quarzfasern sowie ggf. weiteren anorganischen Füllstoffen in einer Aufschlämmung aufgebracht. Als anorganische Fasern für die Beschichtungsmasse kommen grundsätzlich alle entsprechend temperaturbeständigen Fasern wie Aluminiumsilikatfasern, Quarzfasern usw. in Frage, wobei jedoch Aluminiumsilikatfasern aus Kostengründen in der Regel bevorzugt sein werden. Die Fasern müssen so eng beieinanderliegen, daß das Kieselsol dazwischen eine Verbindung zu benachbarten Fasern bildet und an diesen haftet, statt eigene, nicht an Füllstoff gebundene Partikel zu bilden. Die Fasern wirken somit primär als Dispergierungsmittel für das Kieselsol, um mit diesem eine geschlossene Oberfläche zu bilden.

Auch Aluminiumsilikatfasern sind jedoch noch teurer als die meisten anorganischen körnigen Zuschlagstoffe wie gemahlenes Aluminiumoxid, Quarzsand, Mullit, Zirkonoxid usw., so daß diese Fasern aus Kostengründen durch körnige Füllstoffe gestreckt werden können, die ähnlich wie die Fasern, wenn auch in geringerem Umfange, als Dispergierungsmittel für das Kieselsol dienen können. Als anorganische körnige Zuschlagstoffe kommen weiterhin Tone und Kaolin in Frage. Bevorzugt ist Aluminiumoxid ggf. mit einer Zumischung aus Kaolin, welches die Geschmeidigkeit der Beschichtung verbessert.

Die Menge an Kieselsol ergibt sich im wesentlichen aus dem Bedarf an Bindemittel für die geschlossene Oberflächenbeschichtung im Hinblick auf die gewünschte Verbackung der Füllstoffe miteinander. Die Menge des Kieselsol hat eine Untergrenze dort, wo sich eine zu geringe Abriebfestigkeit der Oberfläche durch zu geringen Bindemittelanteil ergibt. Aus diesem Gesichtspunkt darf der Anteil des Kieselsol als Feststoff nicht geringer sein als etwa ein Zehntel der damit zu bindenden Füllstoffe und Fasern in der Oberflächenbeschichtung, so daß das Kieselsol in der geschlossenen Oberflächenbeschichtung jedenfalls in einem Feststoffanteil von 10 Gew.-% oder mehr vorliegt. Eine Erhöhung des Kieselsolanteils ergibt zunächst eine Erhöhung der Abriebfestigkeit durch bessere Einbindung der Fasern und der körnigen Füllstoffe sowie weiterhin eine glänzende und glattere Oberfläche. Eine Obergrenze für den Kieselsolanteil in der geschlossenen Oberflächenbeschichtung liegt da, wo das Kieselsol dazu neigt, sich in körniger Form zu partikulieren und auf diese Weise brüchig zu werden. Dies wird durch einen ausreichend hohen Füllstoff-, insbesondere Fasergehalt, des Kieselsols vermieden. Daher darf der Anteil des Kieselsol bezogen auf die Menge der Füllstoffe in der Beschichtungsmasse nur etwa bei 1 : 1 liegen, so daß also mindestens ebenso viele Gewichtsanteile Füllstoffe wie Trockengewichtsanteil Kieselsol in der geschlossenen Oberflächenbeschichtung vorhanden sind. Hierbei sollte jedoch der Anteil der in Faserform vorliegenden Füllstoffe nicht unter einem Drittel der Füllstoffe der Oberflächenbeschichtung liegen, um die Fasern ausreichend als Netzwerkbildner zur Bildung eines geschlossenen Films wirksam werden zu lassen.

Die vorstehenden Angaben beziehen sich auf die Gewichtsanteile in der fertigen Beschichtung, wobei also die Trockenmasse des Kieselsol berücksichtigt ist. Das wässrige Kieselsol, also die kolloidale Kieselsäure, besitzt jedoch einen Wasseranteil von zwischen etwa 60 und 70 %, der ggf. zusammen mit einer zusätzlichen Wasserzugabe zur Verdünnung dazu dient, durch Einstellung der Viskosität oder allgemein des Fließverhaltens das Bindemittel mit den Füllstoffen zu vermischen und einen geschlossenen Auftrag zu ermöglichen. Dies kann unterstützt werden durch eine Zugabe von Netzmitteln, wie dies an sich bekannt ist, wobei natürlich auch eine mechanische Unterstützung durch Rakeln oder Walzen in Frage kommt.

Nachfolgend werden zwei Beispiele für eine solche Überzugsmasse angegeben:

### Beispiel 1

55,8 Gew.-% wässriges Kieselsol (30 % Feststoffanteil)
23,5 Gew.-% Aluminiumsilikatfasern
11,9 Gew.-% Aluminiumoxid
5,9 Gew.-% Kaolin
Nach Herausrechnung des Wasseranteils der kolloidalen Kieselsäure der obigen Beschichtungsmasse ergibt sich eine Feststoffverteilung von etwa 30 Gew.-% Kieselsol, 40 Gew.-% Aluminiumsilikatfasern, 20 Gew.-% Aluminiumoxid und 10 Gew.-% Kaolin.

### Beispiel 2

70 Gew.-% wässriges Kieselsol (30 % Feststoffanteil)
13,3 Gew.-% Aluminiumsilikatfasern
6,7 Gew.-% Aluminiumoxid
10 Gew.-% Kaolin
Nach Herausrechnung des Wasseranteils der kolloidalen Kieselsäure der vorstehenden Beschichtungsmasse ergibt sich eine Feststoffverteilung von etwa 41 Gew.-% Kieselsol, 26 Gew.-% Aluminiumsilikatfasern, 13 Gew.-% Aluminiumoxid und 20 Gew.-% Kaolin.

Sofern ein solches Beschichtungsmaterial auf der Basis von Kieselsol mit mineralischen Fasern zusammen mit mineralischen Multifilament-Verstärkungsfäden 2b verwendet wird, kann der Anteil der mineralischen Fasern in der Beschichtung etwas niedriger gewählt werden, soweit die Filamente der Verstärkungsfäden 2b die Funktion der mineralischen Fasern übernehmen können. Soweit derartige Verstärkungsfäden oder -gewebe bzw. -gelege in eine Deckschicht 2a gemäß Fig. 4 eingebettet werden sollen, erfolgt zunächst ein Auflegen der Verstärkungsfäden 2b auf eine nackte oder bereits vorbeschichtete Oberfläche 4a des Wärmedämmkörpers 1 und sodann anschließend ein Auftrag des Materials der Deckschicht 2a mittels einer geeigneten Vorrichtung wie eines Spritzkopfes oder mittels Auftragswalzen.

Zur Erleichterung des Auftrags können gemahlene anorganische Fasern verwendet werden, die jedoch immer noch eine Länge in der Größenordnung von zehntel Millimetern oder wenig darunter besitzen, was im Hinblick auf einen üblichen Faserdurchmesser von einigen µm auch bei einer solch kurzen Faserlänge noch einen klar faserigen Charakter mit einer gegenüber dem Durchmesser um Größenordnungen größeren Länge ergibt. Da die Teilchen des Kieselsol außerordentlich klein sind, gelingt auch mit derart kurzen, gemahlenen Fasern eine einwandfreie Schichtbildung, soweit der Faseranteil gegenüber dem körnigen Füllstoffanteil nicht zu stark verringert wird. Im allgemeinen sollte das Verhältnis der körnigen Füllstoffe zu den Fasern der Beschichtung nicht größer als 3 : 1, besser nicht größer als 2 : 1 sein, so daß der Anteil des in Faserform vorliegenden Füllstoffes der Oberflächenbeschichtung in jedem Falle erheblich bleibt.

Insbesondere für Hochtemperatureinsätze, beispielsweise in Elektro-Wärmespeicheröfen, Abgaskanälen oder dergleichen ergibt sich durch die keramisierte Deckschicht 2a eine ausreichend harte und insbesondere in der Gasströmung erosionsfeste sowie Spannungswechseln standhaltende Oberfläche, ohne daß zusätzliche, aufwendige Maßnahmen wie Glasgewebeumhüllungen, Blechabdeckungen oder dergleichen erforderlich sind. Wie in Fig. 3 veranschaulicht ist, kann jedoch bei Bedarf eine zusätzliche mechanische Verstärkung einer solchen Deckschicht 2a dadurch erfolgen, daß zumindest in einer Zugbelastungsrichtung, zweckmäßig jedoch in zwei aufeinander senkrecht stehnden Zugbelastungsrichtungen Verstärkungsfäden 2b an der Beschichtung vorgesehen sind. Derartige Verstärkungsfäden 2b können in der aus Fig. 3 ersichtlichen Weise in das Material der Deckschicht 2a eingebettet sein und bestehen dann vorteilhaft aus ausreichend hitzebeständigem Material wie Glasfaser, so daß die Verstärkungsfäden 2b auch bei Hitzeeinwirkung im Betrieb erhalten bleiben. Infolge der in Fig. 3 dargestellten Abdeckung der Verstärkungsfäden 2b durch das Material der Deckschicht 2a sind die Verstärkungsfäden 2b nicht in vollem Umfange der auftretenden Wärmewirkung ausgesetzt, so daß sie ggf. aus Borsilikatglas-Filamenten bestehen können; bei Bedarf können die Verstärkungsfäden 2b jedoch ganz oder teilweise auch aus höhertemperaturbeständigem Material wie Quarzglas-Filamenten gefertigt werden.

Alternativ können Verstärkungsfäden 2b auch an der Aussenseite der Deckschicht 2a vorgesehen werden, wo sie diese bei Handhabung und Montage schützend abdecken können.

Die Verstärkungsfäden 2b sind zweckmäßig in Form eines Geleges oder, insbesondere in der Position einer Kaschierungsbahn an der Außenoberfläche, in Form eines Gewebes aufgebracht, so daß sie Zug aus wechselnden Richtungen widerstehen können. Dies ist in Fig. 1, B, schematisch dargestellt.

Als Kaschierungsbahnen eignen sich Metallfolien wie Aluminium- oder Edelstahlfolien oder Bahnen aus sich bei Hitzeeinwirkung sich verflüchtigendem Material wie Papier, wenn die Kaschierungsbahn im Hochtemperatureinsatz selbst nicht benötigt wird. Die Haftung an der Deckschicht 2a kann entweder durch diese selbst oder einen zwischengeschalteten Kleber problemlos hergestellt werden.

Soweit vor Eintritt der Keramisierungstemperatur die Bindewirkung der Kieselsolbeschichtung infolge der Deckschicht 2a ungünstig gering ist, kann diese mit einem organischen Bindemittel als Zuschlagstoff versehen werden, welches für eine saubere Haftung der noch "grünen" Deckschicht 2b am Wärmedämmaterial 4 bzw. einer Kaschierungsbahn an der Oberseite der Deckschicht 2b sorgt, soweit Temperaturen von 200° C bis 300° C nicht überschritten werden. Sofern bis in Bereiche oberhalb von etwa 200° C bis 300° C eine entsprechende Stabilisierung der Oberfläche der Deckschicht 2a erforderlich ist, wenn beispielsweise eine Kaschierungsbahn aus Kraftpapier weggebrannt ist und vor Eintritt der keramischen Bindung bereits entsprechende Belastungen etwa durch Gasströmungen auftreten, kann weiterhin ein Glas oder glasbildender Stoff als Zuschlagstoff verwendet werden, beispielsweise Wasserglas, um bis in höhere Temperaturen hinein eine Bindungswirkung zu erzielen, die erst bei annäherndem Erreichen der Betriebs-Endtemperatur durch die keramische Bindung abgelöst wird.

Die Schichtdicke d' der Deckschicht 2a ist auf jeden Fall so gewählt, daß Oberflächenunebenheiten der Oberfläche 4a, die im Falle einer Härtung des Wärmedämmaterials 4 merklich sein können, ausgeglichen werden. Wegen der Erzielung einer glatten Oberfläche ist dadurch gewährleistet, daß die Abdeckung der Oberfläche a tatsächlich vollflächig erfolgt. Soweit die Größe der Oberflächenunebenheiten dies zulassen, kann die Schichtdicke bis auf 0,05 mm vermindert werden, während andererseits eine Schichtdicke von 0,5 mm in aller Regel nicht zu überschritten werden braucht. Eine den meisten Anforderungen gerecht werdende und herstellungstechnisch gut beherrschbare Schichtdicke d' liegt zwischen 0,2 und 0,3 mm.

## Patentansprüche

1. Durch Pressen verdichteter, insbesondere kontinuierlich oder quasi-kontinuierlich hergestellter, formsteifer Wärmedämmkörper aus einem hochdispersen Wärmedämmaterial auf der Basis von aus der Flammenhydrolyse gewonnenem mikroporösem Oxidaerogel, insbesondere Kieselsäureaerogel und/oder Aluminiumoxidaerogel, dem Mineralfasern und ggf. Trübungsmittel zugesetzt sind, mit einer Deckschicht (2a) auf der Basis von anorganischem Bindemittel mit anorganischen Füllstoffen, die Fasern sind oder enthalten, dadurch gekennzeichnet, daß zur Bildung einer bei Temperaturen zwischen 500° C und 1000° C keramisierenden Deckschicht (2a) das anorganische Bindemittel Kieselsol ist, welches in einem Verhältnis zu den anorganischen Füllstoffen von höchstens 1 : 1 und mindestens 1 : 9, jeweils bezogen auf Trockengewicht, enthalten ist, wobei die anorganischen Füllstoffe vorzugsweise wenigstens zu einem Drittel anorganische Fasern, Rest körnige Füllstoffe, sind, und daß die Deckschicht (2a) mit einer Unebenheiten in der Oberfläche (4a) des Wärmedämmkörpers (1) ausgleichenden Schichtdicke (d') aufgebracht ist.

2. Wärmedämmkörper nach Anspruch 1, dadurch gekennzeichnet, daß die Oberfläche der Decksicht (2a) durch Rakeln oder dergleichen egalisiert ist.

3. Wärmedämmkörper nach Anspruch 1 oder 2, dadurch gekennzeichnet, daß die Deckschicht (2a) Verstärkungsfäden (2b) aufweist, insbesondere eingebettet enthält.

4. Wärmedämmkörper nach einem der Ansprüche 1 bis 3, dadurch gekennzeichnet, daß die Deckschicht (2a) zusätzlich einen organischen Klebstoff enthält, der sich bei Temperaturen von 200° C bis 300° C verflüchtigt.

5. Wärmedämmkörper nach einem der Ansprüche 1 bis 3, dadurch gekennzeichnet, daß die Deckschicht (2a) mit einer Kaschierungsbahn versehen und mit dieser durch Klebung verbunden ist.

6. Wärmedämmkörper nach Anspruch 5, dadurch gekennzeichnet, daß die Kaschierungsbahn eine Metallfolie wie eine Aluminiumfolie oder eine Edelstahlfolie ist.

7. Wärmedämmkörper nach Anspruch 5, dadurch gekennzeichnet, daß die Kaschierungsbahn ein Gewebe oder Gelege aus künstlicher oder natürlicher Textilfaser oder mineralischer Faser, wie Glasfaser, ist.

8. Wärmedämmkörper nach Anspruch 5 oder 7, dadurch gekennzeichnet, daß die Kaschierungsbahn aus einem sich bei Wärmeeinwirkung verflüchtigenden Werkstoff wie Papier besteht.

9. Wärmedämmkörper nach einem der Ansprüche 1 bis 8, dadurch gekennzeichnet, daß die Deckschicht (2a) einen Überzug mit einer Schichtdicke (d') von zwischen etwa 0,05 und 0,5 mm, vorzugsweise zwischen 0 2 und 0,3 mm bildet.

10. Verfahren zur Herstellung eines Wäremdämmkörpers nach einem der Ansprüche 1 bis 9, dadurch gekennzeichnet, daß zur Bildung der Abdeckschicht auf das gepreßte Dämmaterial mittels Sprühens, Auftrags oder dergleichen eine Aufschlämmung mit einem Wassergehalt von zwischen etwa 20 und 50 Gew.-%, vorzugsweise unter 40 Gew.-%, der Aufschlämmung aufgebracht wird.

11. Verfahren nach Anspruch 10, dadurch gekennzeichnet, daß der auf diese Weise naß beschichtete Preßstoff vorzugsweise bei erhöhter Temperatur von etwa 100°C bis 150°C getrocknet wird.

## Claims

1. Dimensionally stable thermal insulator compacted by pressing and produced in particular continuously or quasi-continuously from a highly disperse thermal insulating material based on microporous oxide aerogel obtained from flame hydrolysis, in particular silica aerogel and/or aluminium oxide aerogel, to which have been added mineral fibres and, if desired, opacifiers, with a top layer (2a) based on inorganic binder with inorganic fillers which are or contain fibres, characterized in that, to form a top layer (2a) which ceramizes at temperatures between 500°C and 1000°C, the inorganic binder is silica sol which is present in a ratio to the inorganic fillers of at most 1:1 and at least 1:9, in each case relative to dry weight, the inorganic fillers preferably being at least one third inorganic fibres and the remainder granular fillers, and in that the top layer (2a) is applied in a thickness (d') which levels out unevennesses in the surface (4a) of the thermal insulator (1).

2. Thermal insulator according to Claim 1, characterized in that the surface of the top layer (2a) is smoothed out by wiping off excess or the like.

3. Thermal insulator according to Claim 1 or 2, characterized in that the top layer (2a) has reinforcing threads (2b), in particular containing them in embedded form.

4. Thermal insulator according to any one of Claims 1 to 3, characterized in that the top layer (2a) additionally contains an organic adhesive which volatilizes at temperatures of 200°C to 300°C.

5. Thermal insulator according to any one of Claims 1 to 3, characterized in that the top layer (2a) has been provided with a laminating web and been connected thereto by adhesive bonding.

6. Thermal insulator according to Claim 5, characterized in that the laminating web is a metal foil such as an aluminium foil or a stainless steel foil.

7. Thermal insulator according to Claim 5, characterized in that the laminating web is a fabric or arrangement of synthetic or natural texture fibre or mineral fibre, such as glass fibre.

8. Thermal insulator according to Claim 5 or 7, characterized in that the laminating web consists of a material such as paper which volatilizes under the action of heat.

9. Thermal insulator according to any one of Claims 1 to 8, characterized in that the top layer (2a) forms a coating having a thickness (d') of between about 0.05 and 0.5 mm, preferably between 0.2 and 0.3 mm.

10. Process for manufacturing a thermal insulator according to any one of Claims 1 to 9, characterized in that, to form the top layer, a slurry having a water content of between about 20 and 50 % by weight, preferably below 40 % by weight, of the slurry is applied to the pressed insulating material by means of spraying, coating or the like.

11. Process according to Claim 10, characterized in that the compressed material wet-coated in this way is preferably dried at elevated temperatures of about 100°C to 150°C.

## Revendications

Corps d'isolation thermique dont la masse volumique a été accrue par compression, de forme stable, fabriqué notamment de façon continue ou quasi-continue d'un matériau calorifuge à haute dispersion, à base d'aérogel oxydé, microporeux, obtenu par hydrolyse à la flamme, notamment d'aérogel de silice et/ou d'aérogel d'oxyde d'aluminium, auquel sont ajoutées des fibres minérales et, éventuellement, des agents de turbidité, comprenant une couche extérieure (2a) à base de liant inorganique avec des charges inorganiques formées par ou contenant des fibres, caractérisé en ce que, en vue de la formation d'une couche extérieure (2a) qui se transforme à des températures comprises entre 500 et 1000°C en un produit semblable à de la céramique, le liant inorganique est un sol de silice, lequel est contenu dans la couche extérieure dans un rapport aux charges inorganiques de tout au plus 1:1 et d'au moins 1:9, sur la base des poids respectifs à l'état sec, les charges inorganiques étant constituées de préférence pour au moins un tiers par des fibres inorganiques, la partie restante étant constituée par des charges granulaires, et que la couche extérieure (2a) est appliquée sous une épaisseur (d') qui compense les inégalités de la surface (4a) du corps d'isolation thermique (1).

2. Corps selon la revendication 1, caractérisé en ce que la surface de la couche extérieure (2a) est égalisée par raclage ou par une opération semblable.

3. Corps selon la revendication 1 ou 2, caractérisé en ce que la couche extérieure (2a) présente des fils de renfort (2b), lesquels sont notamment noyés dans la couche extérieure.

4. Corps selon une des revendications 1 à 3, caractérisé en ce que la couche extérieure (2a) contient, en outre, un adhésif organique qui se volatilise à des températures de 200-300°C.

5. Corps selon une des revendications 1 à 3, caractérisé en ce que la couche extérieure (2a) est pourvue d'une bande de doublage, à laquelle elle est reliée par adhésion.

6. Corps selon la revendication 5, caractérisé en ce que la bande de doublage est une feuille métallique telle qu'une feuille d'aluminium ou une feuille d'acier fin.

7. Corps selon la revendication 5, caractérisé en ce que la bande de doublage est un tissu ou un non-tissé constitué de fibres textiles artificielles ou naturelles, ou de fibres minérales, de fibres de verre par exemple.

8. Corps selon la revendication 5 ou 7, caractérisé en ce que la bande de doublage est constituée d'un matériau qui se volatilise sous l'action de la chaleur, de papier par exemple.

9. Corps selon une des revendications 1 à 8, caractérisé en ce que la couche extérieure (2a) forme un revêtement d'une épaisseur (d') comprise entre 0,05 et 0,5 mm, de préférence entre 0,2 et 0,3 mm.

10. Procédé pour la fabrication d'un corps d'isolation thermique selon une des revendications 1 à 9, caractérisé en ce que, en vue de la formation de la couche de revêtement sur le matériau calorifuge comprimé, on applique sur celui-ci, par pulvérisation, enduction ou une opération semblable, une suspension ayant une teneur en eau comprise entre environ 20 et 50 % en poids, de préférence inférieure à 40 % en poids.

11. Procédé selon la revendication 10, caractérisé en ce que l'on effectue le séchage du matériau comprimé, ainsi pourvu d'un revêtement humide, à une température plus élevée, notamment à une température d'environ 100 à 150°C.

**Fig. 1**

**Fig. 2**

**Fig. 3**